# EUROPEAN PATENT APPLICATION

(11) **EP 1 471 513 A2**
(43) Date of publication of application: **27.10.2004**
(21) Application number: 04009429.4
(22) Date of filing: 21.04.2004
(51) Int. Cl.: G11B 7/125

(54) **Information recording apparatus and information recording method**

(30) Priority: 21.04.2003 JP 2003116159
(71) Applicant: Pioneer Corporation, Meguro-ku, Tokyo (JP)
(72) Inventor: Kato, Masahiro, 2610 Hanazono 4-chome Tokorozawa-shi (JP); Yone, Tatsuhiro, 2610 Hanazono 4-chome Tokorozawa-shi (JP)
(74) Representative: Kühn, Armin

(57) **Abstract**

A recording unit includes a laser diode emitting a recording light for information recording, a strategy signal generating unit generating a strategy signal, a correction signal generating unit generating the correction signal for offsetting a tilt of a waveform level of the recording light, and a driving signal generating unit generating a corrected driving signal for correcting the tilt of the waveform level of the recording light based on the strategy signal and the correction signal. The influence of the individual characteristics of the laser, the laser driving circuit and the connecting cable are thereby reduced.

## Description

### BACKGROUND OF THE INVENTION

### Field of the Invention:

The present invention relates to an information recording technique on an optical disc.

### Description of Related Art:

Information recording on a recordable-type optical disc on which information is additionally recordable and rewritable is performed by driving a laser light source by a pulse signal corresponding to recording data, generating a recording laser light and irradiating it on an information recording surface of the optical disc. As a laser light source, a semiconductor laser such as a laser diode is utilized. Power of the recording laser light is controlled by controlling current quantity which is supplied to the laser diode, and recording pits (recording marks) corresponding to data to be recorded are formed on the optical disc.

A semiconductor laser utilized as a laser light source has an individual characteristic, and a laser emitting waveform which is actually emitted from the semiconductor laser is affected by the individual characteristic of the semiconductor laser itself. Above all, many semiconductor lasers for high-speed recording, which are capable of high-power outputting, have characteristics of tilting laser emitting waveforms. Also, the laser emitting waveform is varied due to the characteristics of the driving circuit which supplies the current to the semiconductor laser, further, due to transmission characteristics of a cable which connects the semiconductor laser and the driving circuit, and a distance between them. Owing to those causes, an overshoot and an undershoot with ringing often occur on an actual laser emitting waveform.

There is known a method of inserting a resistor and a condenser in parallel with the laser diode as a countermeasure to the overshoot and the undershoot in the laser emitting waveform. Those kinds of circuits formed by the resistor and the condenser are called snubber circuits. Those circuits limit high-frequency component in the driving pulse signals of the laser diodes and suppress the overshoot and the undershoot in the laser emitting waveforms.

By the way, an information recording apparatus refers to strategy information and generates the driving signal to drive the laser diode by utilizing the signal. The strategy information defines the optimum laser emitting waveform. The information recording apparatus reads out the strategy information stored in a memory in advance or recorded on the optical disc as an option, and generates the driving signal.

However, when the semiconductor laser having the characteristics of the tilting laser emitting waveform is utilized, the tilt of the laser emitting waveform cannot be corrected, even though the strategy information is referred to and the driving signal is generated to correct the characteristics of the frequency of the driving signal by the snubber circuit. This is because a tilt component of the laser emitting waveform has very low frequency. Therefore, the recording power is varied from a front edge to a back edge of the recording mark according to the tilt of the laser emitting waveform. Thereby, heat energy given to a recording film is varied, and a recording characteristic gets worse.

### SUMMARY OF THE INVENTION

The present invention has been achieved in order to solve the above problems. It is an object of this invention to effectively correct influence caused by the individual characteristics of the light source such as a semiconductor laser, thereby to enable high-quality recording.

According to one aspect of the present invention, there is provided an information recording apparatus including a light source which emits a recording light for information recording based on an input signal, a strategy signal generating unit which generates a strategy signal indicating a driving signal waveform obtained by modulating a recording signal having a mark portion and a space portion in accordance with a length of the recording mark portion, a correction signal generating unit which generates a correction signal for offsetting a tilt of a waveform level of the recording light, and a driving signal generating unit which generates a corrected driving signal for correcting the tilt of the waveform level of the recording light based on the strategy signal and the correction signal, and supplies the corrected driving signal to the light source as the input signal.

According to another aspect of the present invention, there is provided an information recording method which is executed by an information recording apparatus including a light source emitting a recording light for information recording, including a strategy signal generating process which generates a strategy signal indicating a driving signal waveform obtained by modulating a recording signal having a mark portion and a space portion in accordance with a length of the mark portion, a correction signal generating process which generates a correction signal for offsetting a tilt of a waveform level of the recording light, and a corrected driving signal generating process which generates a corrected driving signal for correcting a tilt of the waveform level of the recording light based on the strategy signal and the correction signal, and supplies the corrected driving signal to the light source as an input signal.

The nature, utility, and further features of this invention will be more clearly apparent from the following detailed description with respect to preferred embodiment of the invention when read in conjunction with the accompanying drawings briefly described below.

### BRIEF DESCRIPTION OF THE DRAWINGS

FIG. 1 is a block diagram showing a schematic configuration of a recording unit according to a basic embodiment of the present invention.
FIG. 2 is a block diagram showing a schematic configuration of another recording unit according to the basic embodiment of the present invention.
FIG. 3 is a block diagram showing a schematic configuration of still another recording unit according to the basic embodiment of the present invention.
FIG. 4 is a block diagram showing a schematic configuration of still another recording unit according to the basic embodiment of the present invention.
FIG. 5 is a block diagram showing a schematic configuration of an information recording and reproducing apparatus according to the first embodiment of the present invention.
FIG. 6 is a block diagram showing a main configuration of an optical pickup and a recording control unit according to the first embodiment.
FIG. 7 is a timing chart showing a signal waveform of components shown in FIG. 6.
FIG. 8 is a block diagram showing a main configuration of an optical pickup and a recording control unit according to the second embodiment.
FIG. 9 is a timing chart showing a signal waveform of components shown in FIG. 8.
FIG. 10 is a block diagram showing a main configuration of an optical pickup and a recording control unit according to the third embodiment.
FIG. 11 is a timing chart showing a signal waveform of components shown in FIG. 10.
FIG. 12 is a block diagram showing a configuration of a tilt signal generating unit according to the modification.
FIG. 13 is a timing chart showing a relation of a recording signal and a tilt signal shown in FIG. 12.
FIG. 14 is a timing chart of a signal according to the modification corresponding to the second embodiment.

### DETAILED DESCRIPTION OF THE PREFERRED EMBODIMENTS

The preferred embodiments of the present invention will now be described below with reference to the attached drawings.

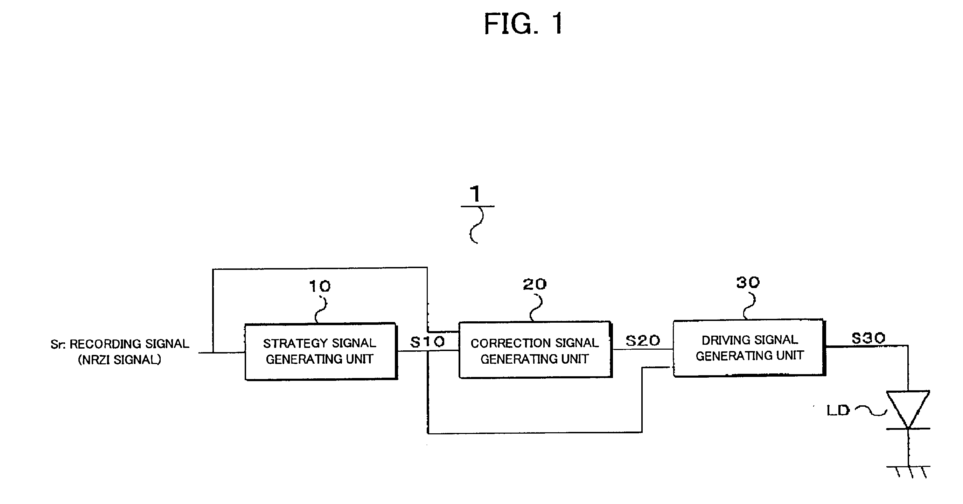

FIG. 1 schematically shows a configuration of a recording unit 1 according to the basic embodiment of the present invention. The recording unit 1 is utilized as a recording unit in an information recording apparatus of an optical disc and the like. The recording unit 1 receives a recording signal Sr from outside, and drives a laser diode LD by the driving pulse signal generated based on a recording signal Sr to emit the recording laser light. The recording signal Sr is supplied as anNRZI signal, and includes mark portions and space portions. The mark portions correspond to pits formed on the optical disc 2, and the space portions correspond to lands on the optical disc 2. For example, the optical disc 2 may be a CD-R (Compact Disc-Recordable) and a DVD-R (Digital Versatile Disc-Recordable) for recording only once, and a CD-RW (Compact Disc-Rewritable) and a DVD-RW (Digital Versatile Disc-Rerecordable) that allow for repeated erasing and recording of information.

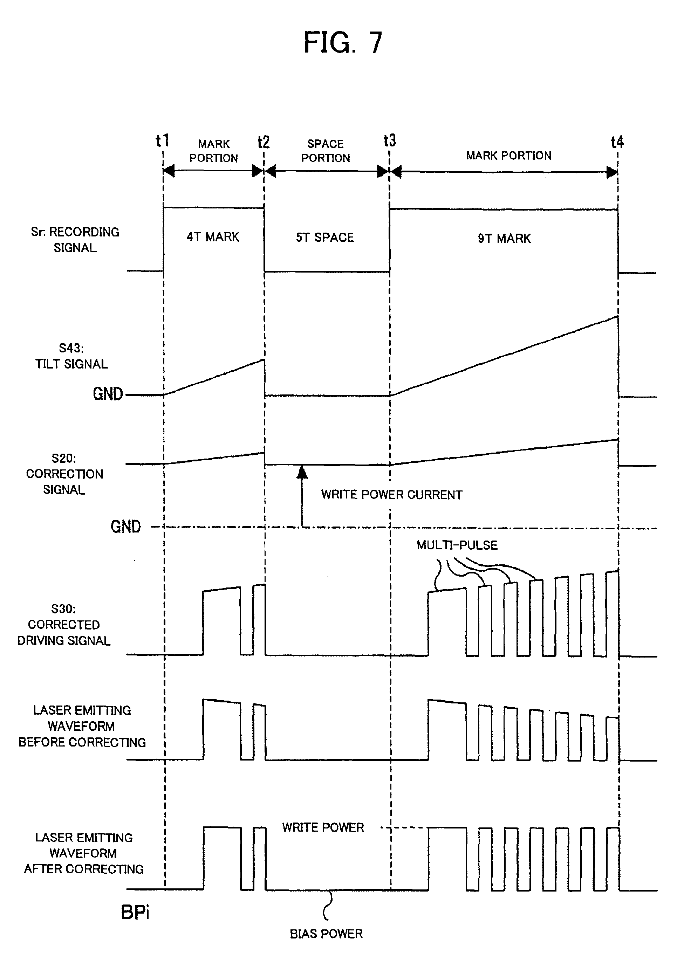

As shown in FIG. 1, the recording unit 1 includes a strategy signal generating unit 10, a correction signal generating unit 20, a driving signal generating unit 30 and the laser diode LD as the light source. The laser diode LD in this example has the characteristics of the tilting laser emitting waveform when a rectangle waveform is inputted as the driving signal (see the laser emitting waveform before correction shown in FIG. 7). The strategy signal generating unit 10 generates a strategy signal S10 specifying the driving pulse waveform obtained by modulating the recording signal Sr according to the length of the mark portion. The strategy indicates a shape of the driving pulse waveform used in driving the laser diode LD based on the recording signal Sr. For example, the strategy may be amulti-pulse-type strategy which is formed by one top pulse and a plurality of multi-pulses, or a non-multi-type strategy, such as a strategy having one top pulse and a lower level period than the top pulse behind the top pulse, or a strategy having one top pulse, one last pulse and a medium level period between the top pulse and the last pulse. It is noted that any-type of strategy can be utilized in the present invention.

The correction signal generating unit 20 generates a correction signal S20 for offsetting the tilt of the waveform level of the recording light emitted from the laser diode LD. The driving signal generating unit 30 generates a corrected driving signal S30 so that the tilt of the waveform level of the recording light can be corrected based on the strategy signal S10 and the correction signal S20, and supplies the corrected driving signal S30 to the laser diode LD.

In the above construction, since the laser diode LD has the characteristics of the tilting laser emitting waveform, the pits cannot be accurately formed because the laser power is not constant, even if the rectangle waveform is inputted as the driving signal. However, since the corrected driving signal S30 is generated in order to offset the peculiar characteristics of the laser diode LD by utilizing the correction signal S20 in the embodiment, it becomes possible to obtain an ideal recording light. As a result, high-quality recording can be realized.

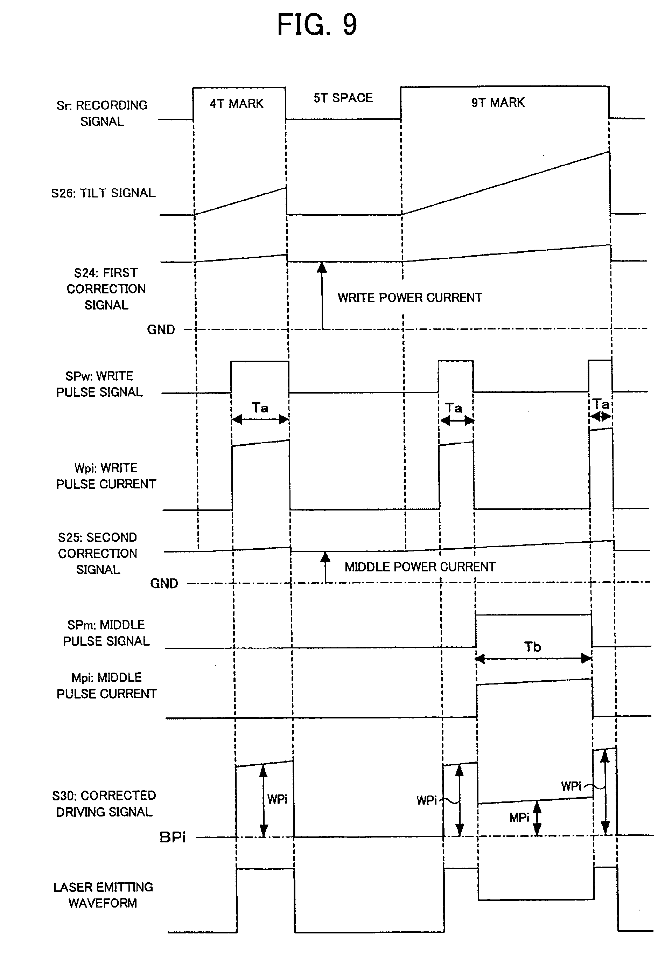

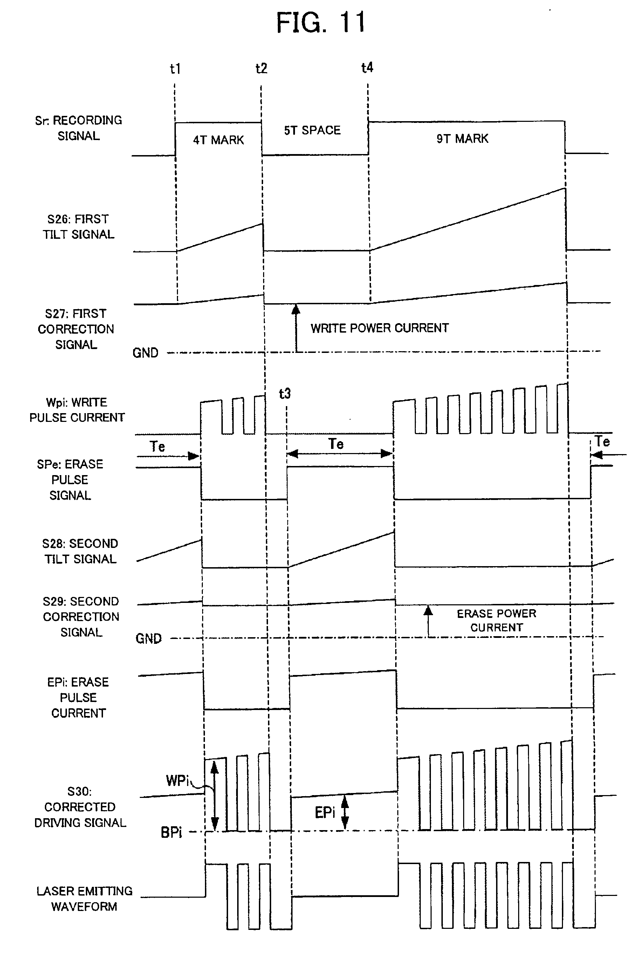

There are two waveforms as the driving waveform of the laser diode LD, i.e., a waveform modulated to two values and a waveform modulated to three values. The waveform modulated to two values is formed by the top pulse and a pulse train following to the top pulse, which is utilized for recording of a DVD-R and a CD-R, for example (see FIG. 7). The waveform modulated to three values is formed by the top pulse, the last pulse and the middle pulse, which is utilized for recording of a DVD-R and a CD-R, for example (see FIG. 9). Further, the waveform modulated to three values is also formed by the write pulse and the erase pulse, which is utilized for recording of a DVD-RW and a CD-RW, for example (see FIG. 11).

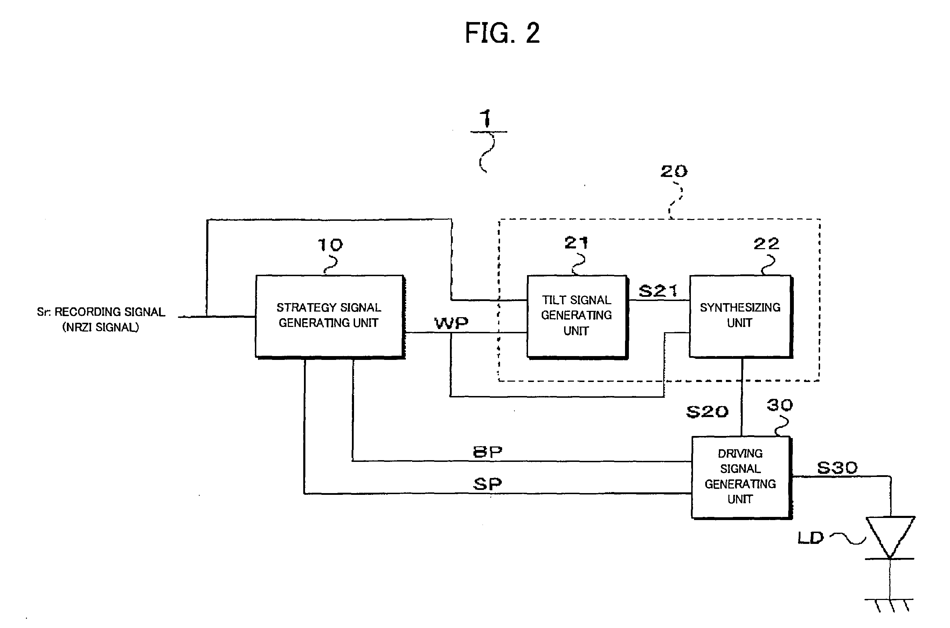

When the driving waveform is formed by the top pulse and the pulse train following the top pulse, the recording unit 1 can be formed as shown in FIG. 2. First, the strategy signal generating unit 10 generates, as the strategy signal S10, a write power signal WP indicating the write power, a bias power signal BP indicating the bias power, and a driving pulse signal SP indicating the position of the driving pulse in the mark portion. When the laser diode LD has ideal characteristics, the write power indicates a maximum level of the driving pulse, while the bias power indicates a minimum level of the driving pulse.

The correction signal generating unit 20 includes a tilt signal generating unit 21 which generates a tilt signal S21 having the tilt corresponding to the write power, and an outputting unit 22 which outputs the correction signal S20 by synthesizing the tilt signal S21 and the write power signal WP indicating the write power in the mark portion of the recording signal Sr. By the correction signal generating unit 20, the correction signal S20 is adjusted according to the write power. The driving signal generating unit 30 generates a corrected driving signal S30 by synthesizing a signal obtained by switching the correction signal S20 based on the strategy signal S10 and the bias power signal BP indicating the bias power.

According to the recording unit 1, the ideal recording light can be obtained by correcting the characteristics of the laser diode LD whose tilt of the laser emitting waveform varies corresponding to the write power.

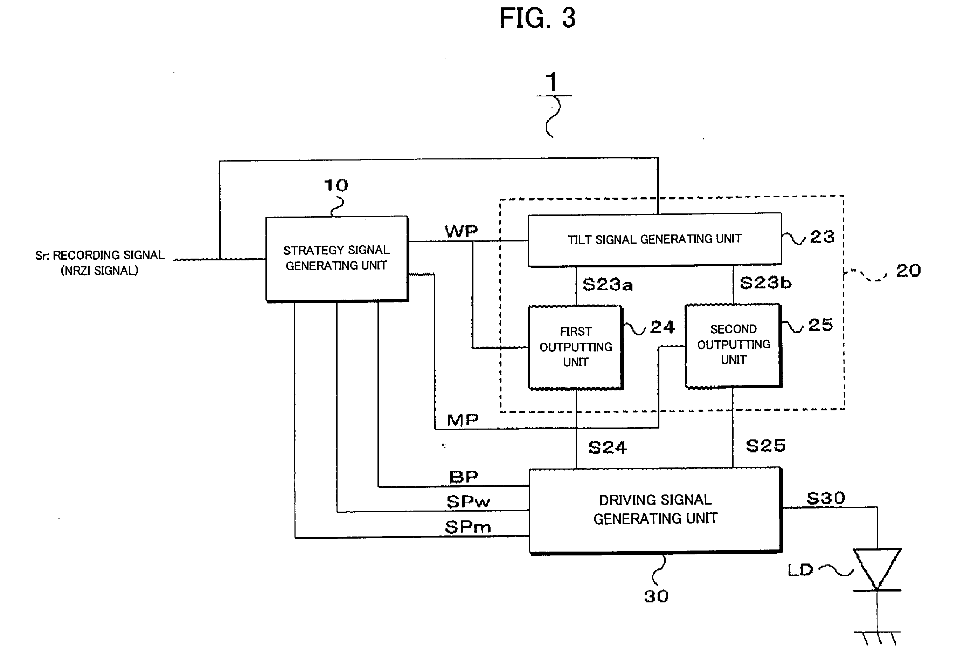

When the driving waveform is the non-multi-pulse formed by the top pulse, the last pulse (hereafter it is suitably called "write pulse") and the middle pulse, the recording unit 1 may be formed as shown in FIG. 3. In this case, the driving waveform is in a shape of a concave (see FIG. 9). First, the strategy signal generating unit 10 generates, as the strategy signal S10, the write power signal WP, the bias power signal BP, the middle power signal MP indicating the power of the middle pulse, the write pulse signal SPw indicating the position of the write pulse, and a middle pulse signal SPm indicating the position of the middle pulse.

The correction signal generating unit 20 includes a tilt signal generating unit 23, a first outputting unit 24 and a second outputting unit 25. The tilt signal generating unit 23 generates, in the mark portion of the recording signal Sr, a first tilt signal S23a having a tilt corresponding to the write power, and a second tilt signal S23b having a tilt corresponding to the middle power. The first outputting unit 24 synthesizes the first tilt signal S23a and the write power signal WP, and outputs a first correction signal S24. The second outputting unit 25 synthesizes the second tilt signal S23b and the middle power signal MP, and outputs a second correction signal S25. The first correction signal S24 and the second correction signal S25 correspond to the above-mentioned correction signal S20. In this case, it is possible to separately control the waveform levels of the write pulse located at front and back edge positions and of the middle power located at an intermediate position.

The driving signal generatingunit 30 synthesizes a signal obtained by switching the first correction signal S24 based on the write pulse signal SPw, a signal obtained by switching the second correction signal S25 based on the middle pulse signal SPm, and the bias power signal PB to generate a corrected driving signal S30.

By the recording unit 1, when the laser diode LD is driven by utilizing the signal modulated to three values, i.e., the bias power, the middle power and the write power, the ideal recording light can be achieved because the corrected driving signal S30 corrected corresponding to the middle power and the write power is supplied to the laser diode LD.

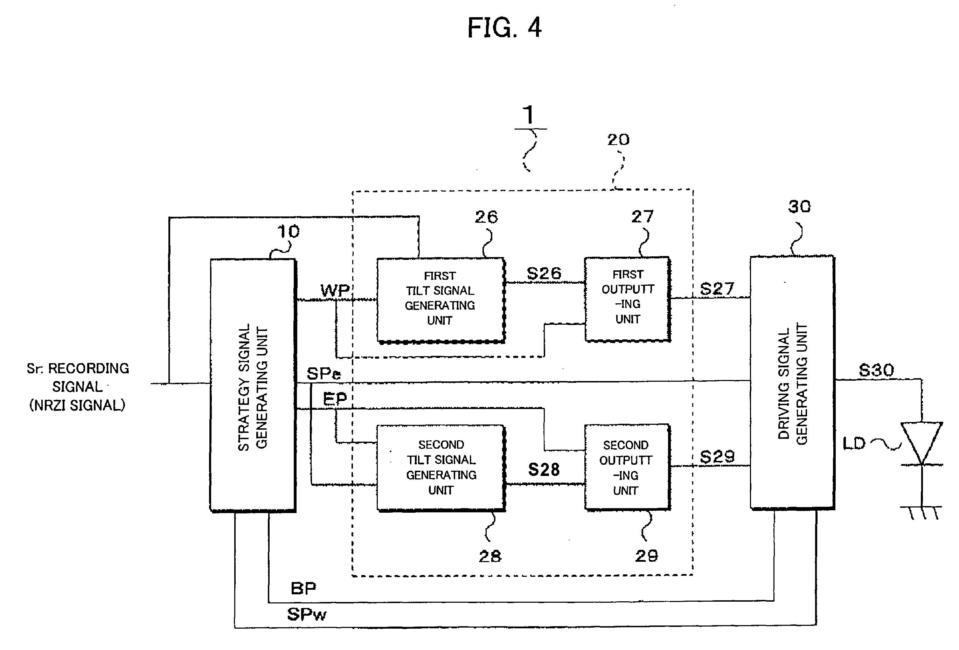

When the recording mark is recorded on the rewritable optical disc such as the DVD-RW, the multi-pulse formed by the write pulse and the erase pulse is given, as the strategy information. The power of the erase pulse is set in order to erase the recording mark. Thereby, overwriting becomes possible. In this case, the recording unit 1 can be formed as shown in FIG. 4.

First, the strategy signal generating unit 10 generates, as the strategy signal S10, the write power signal WP, the bias power signal BP, an erase power signal EP indicating the power of the erase pulse, a write pulse signal SPw indicating the position of the write pulse, and an erase pulse signal SPe indicating the position of the erase pulse.

The correction signal generating unit 20 includes a first tilt signal generating unit 26, a first outputting unit 27, a second tilt signal generating unit 28, and a second outputting unit 29. The first tilt signal generating unit 26 generates, in the mark portion of the recording signal Sr, a first tilt signal S26 having a tilt corresponding to the write power. The first outputting unit 27 outputs a first correction signal S27 by synthesizing the first tilt signal S26 and the write power signal WP. The second tilt signal generating unit 28 generates the second tilt signal S28 having a tilt corresponding to the erase power in the period in which the erase pulse signal is active. The second outputting unit 29 outputs a second correction signal S29 by synthesizing the second tilt signal S27 and the erase power signal EP. The first correction signal S27 and the second correction signal S29 correspond to the correction signal S20.

The driving signal generating unit 30 synthesizes a signal obtained by switching the first correction signal S27 based on the write pulse signal SPw, a signal obtained by switching the second correction signal S29 based on the erase pulse signal SPe and the bias power signal BP, and generates a corrected driving signal S30.

By the recording unit 1, when the laser diode LD is driven by utilizing the signal modulated to three values, e.g., the bias power, the erase power and the write power, the ideal recording light can be achieved because the corrected driving signal S30 which is corrected corresponding to the erase power and the write power is supplied to the laser diode LD.

### [1st Embodiment]

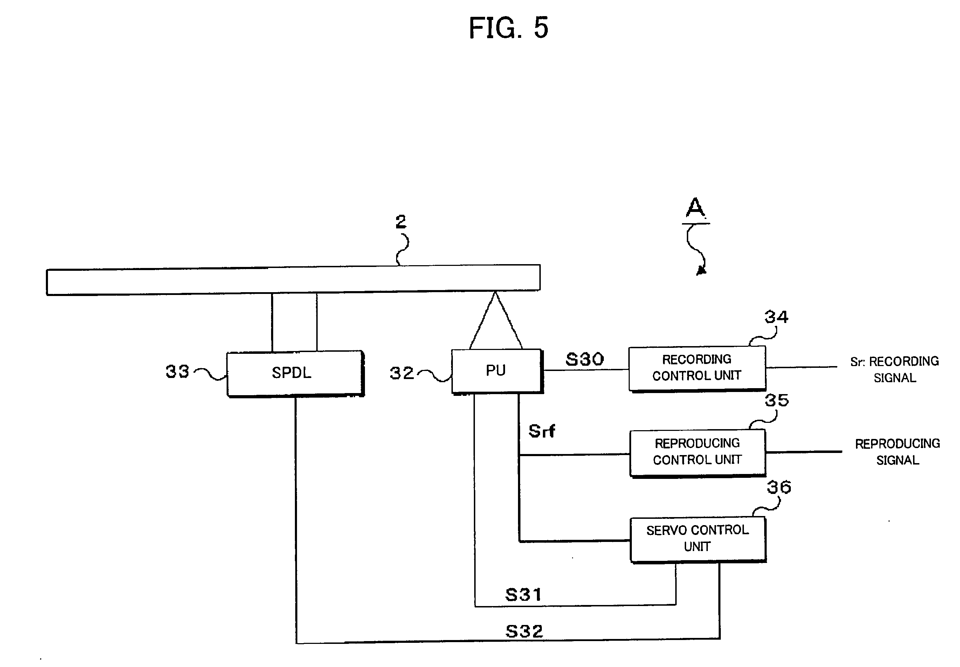

In the first embodiment, the CD-R or the DVD-R is utilized as the optical disc 2. As the driving pulse waveform of the laser diode LD, for example, the multi-pulse type waveform formed by the top pulse and the plurality of multi-pulses is assumed. FIG. 5 schematically shows a whole configuration of the information recording and reproducing apparatus according to the first embodiment of the present invention. An information recording and reproducing apparatus A records the information on the optical disc 2, and reproduces the information from the optical disc 2.

The information recording and reproducing apparatus A includes an optical pickup 32 for irradiating a recording beam and a reproduction beam to the optical disc 2, a spindle motor 33 for controlling rotation of the optical disc 2, a recording control unit 34 for controlling recording of information on the optical disc 2, a reproducing control unit 35 for controlling reproduction of information recorded on the optical disc 2, and a servo control unit 36 for various kinds of servo controls. The servo controls include a spindle servo for controlling rotation of the spindle motor 33, and a focus servo and a tracking servo for controlling a relative position of the optical pickup 32 to the optical disc 2.

The recording control unit 34 receives the recording signal Sr. Then, according to a process described later, the recording control unit 34 generates the corrected driving signal S30 for driving the laser diode LD in the optical pickup 32, and supplies the signal to the optical pickup 32. The reproducing control unit 35 receives the read-out RF signal Srf output by the optical pickup 32, and applies predetermined demodulation processing, decoding processing and the like to generate and output the reproducing signal.

The servo control unit 36 receives the read-out RF signal Srf from the optical pickup 32. Based on the signal Srf, the servo control unit 36 supplies servo signals S31, such as a tracking error signal and a focus signal, to the optical pickup 32, and supplies a spindle servo signal S32 to the spindle motor 33. Thus, various kinds of servo processing are performed, such as the tracking servo, the focus servo, and the spindle servo. Since various known methods can be applied to the reproduction control and the servo control in the present invention, these controls will not be described in detail.

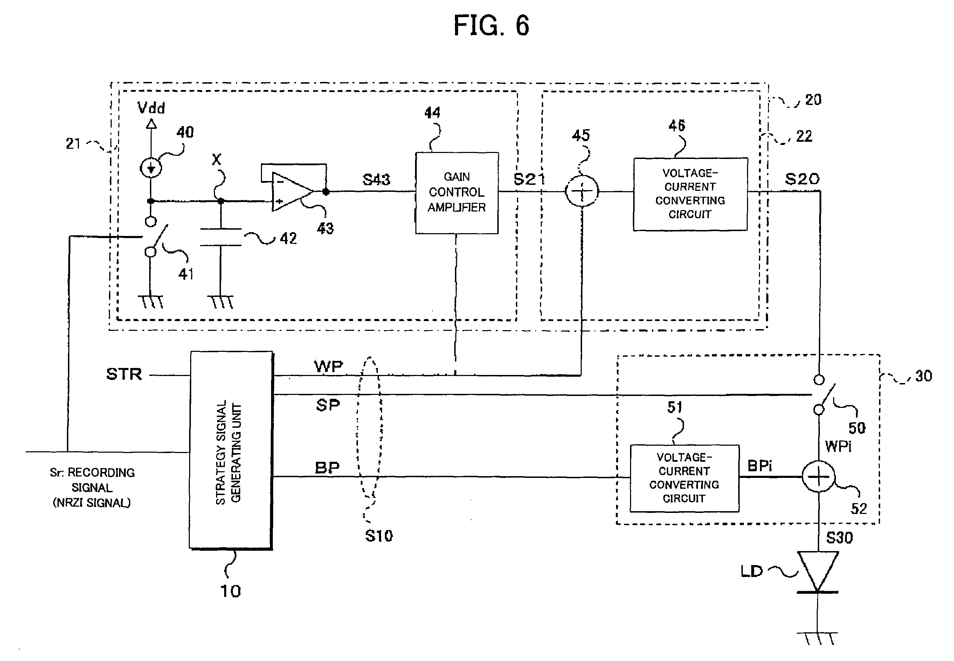

Next, recording control will be explained. FIG. 6 shows a main configuration of the optical pickup 32 and the recording control unit 34 according to the first embodiment, and FIG. 7 shows a waveform in each portion of the main configuration. It is noted that the optical pickup 32 and the recording control unit 34 correspond to the above-mentioned recording unit 1.

The optical pickup 32 includes the laser diode LD as the light source of the recording laser light. The laser diode LD in the example has characteristics that the tilt of the laser emittingwaveformvaries corresponding to the level of the driving pulse. The recording control unit 34 includes the strategy signal generating unit 10, the correction signal generating unit 20 having the tilt signal generating unit 21 and the outputting unit 22, and the driving signal generating unit 30.

The strategy signal generating unit 10 generates the strategy signal S10 for performing the recording according to the recording signal Sr, based on the recording signal Sr. The information relating to the strategy is supplied to the strategy signal generating unit 10, as the strategy information STR. The strategy information STR includes the information about what type of the strategy is utilized, and about a pulse width of an actual driving pulse waveform corresponding to the strategy (e.g., the level of the top pulse, a time width and the like). The strategy signal generating unit 10 refers to the strategy information STR, and generates the write power signal WP, the bias power signal BP and the driving pulse signal SP from the recording signal Sr. In the example, it is prescribed that the write power signal WP and the bias power signal BP respectively indicate voltages corresponding to the write power and the bias power. As shown in FIG. 7, a high level of the recording signal Sr corresponds to the mark portion, and a low level corresponds to the space portion.

The tilt signal generating unit 21 includes a constant current source 40, a switch 41, a condenser 42 and an operation amplifier 43. The switch 41 is formed by an electric field effect transistor and the like, and is in an ON state when the recording signal Sr (NRZI signal) is at the low level. On the other hand, the switch 41 is in an OFF state when the recording signal Sr is at the high level. When the recording signal Sr changes from the low level to the high level, the switch 41 switches from the ON state to the OFF state. Thereon, from a start of the mark portion of the recording signal Sr, the current supplied from the constant current source 40 flows into the condenser 42. Since an output signal of the operation amplifier 43 is fed back to a negative input terminal thereof and a positive input terminal is connected to the condenser 42, the operation amplifier 43 operates as a voltage follower, and an input impedance thereof is extremely high. Therefore, a charge flown into the condenser 42 seldom leaks out. Charging at constant current is performed to the condenser 42. Hence, the voltage of a connection point X linearly increases. If a current value supplied from the constant current source 40 and a capacity value of the condenser 42 are respectively prescribed as "I" and "C", a tilt signal S43 outputted from the operation amplifier 43 has a tilt of I/C (voltage/time).

On the other hand, when the recording signal Sr changes from the high level to the low level, the switch 41 switches from the OFF state to the ON state. Thereon, in the space portion of the recording signal Sr, the charge which is charged in the condenser 42 is discharged.

For example, as shown in FIG. 7, if the recording signal Sr includes 4T mark, 5T space and 9T mark, a level of the tilt signal S43 rises up at a constant tilt from the time t1 which is a starting time of 4T mark, and the level of the tilt signal S43 returns to a ground GND at the time t2 which is the starting time of 5T space. The tilts of the tilt signals S43 at 4T mark and 9T mark coincide with each other.

A gain control amplifier 44 amplifies the tilt signal S43 at an amplification factor determined by a level of the write power signal WP, and outputs the tilt signal S21. Thereby, the tilt of the tilt signal S21 is adjusted corresponding to the write power. The reason why the tilt of the tilt signal S21 is adjusted corresponding to the write power is to correct the characteristic of the laser diode LD whose tilt of the laser emitting waveform varies corresponding to the output power.

The outputting unit 22 includes an adder 45 and a voltage-current converting circuit 46. The adder 45 adds the tilt signal S21 and the write power signal WP. The voltage-current converting circuit 46 converts an output voltage of the adder 45 to the current, and generates the correction signal S20. The correction signal S20 is generated by adding the current corresponding to the tilt signal S21 to the write power current corresponding to the write power signal WP, as shown in FIG. 7. Though the adder 45 is utilizedbecause apolarity of the tilt signal S21 is positive in the example, a subtracter which subtracts the tilt signal S21 from the write power signal WP may be utilized instead of the adder 45, when the polarity of the tilt signal S21 is negative. Namely, so long as the outputting unit 22 has a function to synthesize the tilt signal S21 and the write power signal WP, any configuration may be employed.

The driving signal generating unit 30 includes a switch 50, a voltage-current converting circuit 51 and an adder 52. The switch 50 is formed by the electric field effect transistor and the like, and its ON/OFF switching is controlled by the driving pulse signal SP supplied to the control input terminal. The driving pulse signal SP included in the strategy signal S10 indicates a position of each pulse forming the multi-pulse, and becomes active at the high level. The switch 50 becomes the ON state when the voltage of the control input terminal becomes at the high level. On the other hand, the switch 50 becomes the OFF state when the voltage is at the low level. Hence, the switch 50 switches the correction signal S20 based on the driving pulse signal SP, and outputs a choppered write pulse current WPi to one input terminal of the adder 52. A bias power current BPi, which is produced by converting the bias power signal BP into the current via the voltage-current converting circuit 51, is supplied to the other input terminal of the adder 52. The adder 52 synthesizes the output signal of the switch 50 and the bias power current BPi, and generates the corrected driving signal S30. The corrected driving signal S30 is formed by superimposing the multi-pulse whose level increases to the bias power current BPi, as shown in FIG. 7.

As a result, even if the laser diode LD has a tilt characteristic increasing as the time passes as shown in FIG. 7, the laser emitting waveform shown in FIG. 7 can be obtained because the tilt characteristic is corrected by the corrected driving signal 530. According to the first embodiment, by utilizing the correction signal S20 having an opposite characteristic to the tilt of the driving pulse, the corrected driving signal S30 is generated so that the peculiar characteristic of the laser diode LD can be offset. Therefore, an ideal recording light can be obtained.

### [2nd Embodiment]

In the second embodiment, identically to the first embodiment, the CD-R or the DVD-R is utilized as the optical disc 2. As the driving pulse waveform of the laser diode LD, the non-multi-pulse-type, which is formed by the write pulse and the middle pulse, is assumed. The write pulse is formed by the top pulse located at the front edge of the recording mark and the last pulse located at the back edge, and the middle pulse is located between the top pulse and the last pulse. The level of the middle pulse is set at a comparatively lower level than the levels of the top pulse and the last pulse. However, when the mark portion is short, the driving pulse is formed by one write pulse because the middle pulse is omitted.

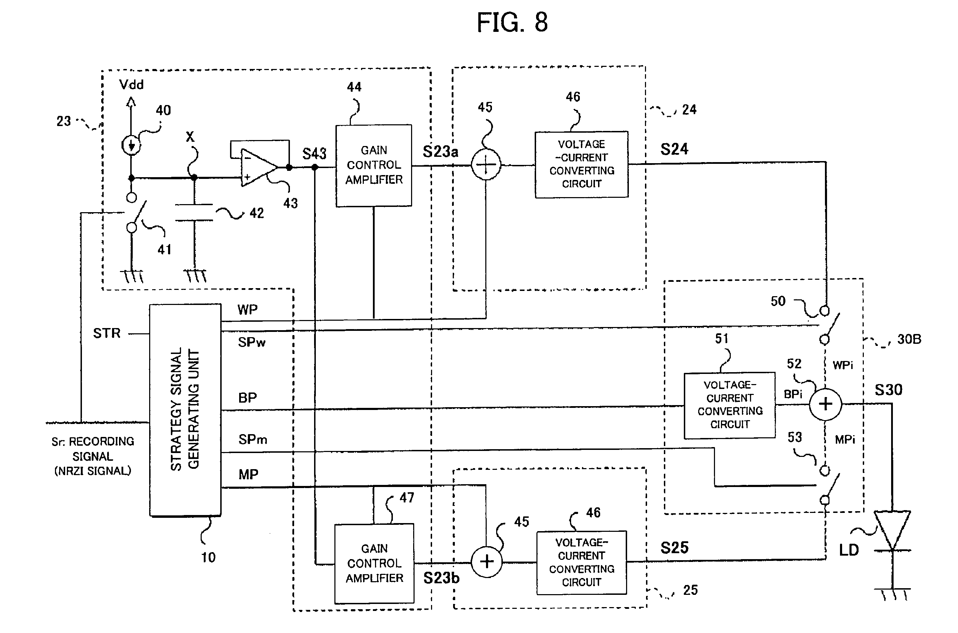

A schematic configuration of the information recording and reproducing apparatus A according to the second embodiment is identical to the configuration of the first embodiment shown in FIG. 5. However, a detailed configuration of a recording control unit 34 is different from the configuration of the first embodiment. FIG. 8 shows a main configuration of the optical pickup 32 and the recording control unit 34 according to the second embodiment. FIG. 9 shows the waveform of each unit of the main configuration.

When the strategy information is the non-multi-pulse type formed by the write pulse and the middle pulse, the recording unit 1 can be formed as shown in FIG. 8. First, the strategy signal generating unit 10 generates, as the strategy signal S10, the write power signal WP, the bias power signal BP, the middle power signal MP indicating the power of the middle pulse, the write pulse signal SPw indicating the position of the write pulse, and the middle pulse signal SPm indicating the position of the middle pulse.

A tilt signal generating unit 23 is identically formed to the tilt signal generating unit 21 according to the first embodiment, except for a gain control amplifier 47 being included. The gain control amplifier 44 amplifies a tilt signal S43 at the amplification factor determined by the level of the write power signal WP, and outputs the first tilt signal S23a. On the other hand, the gain control amplifier 47 amplifies a tilt signal S43 at the amplification factor determined by the level of the middle power signal WM, and outputs the second tilt signal S23b. Thereby, the tilt of the first tilt signal S23a is adjusted according to the write power, and the tilt of the second tilt signal S23b is adjusted according to the middle power. Since the tilt of the laser emitting waveforms of the laser diode LD varies in correspondence with the output power, the tilts of the laser emitting waveforms of the write power and the middle power are different. Therefore, when the driving pulse is non-multi-pulse-type, the first tilt signal S23a and the second tilt signal S23b respectively corresponding to the write power and the middle power are generated, and the characteristics of the laser diode LD is corrected by the signals.

The first outputting unit 24 and the second outputting unit 25 include the adder 45 and the voltage-current converting circuit 46, identically to the outputting unit 22 of the first embodiment. Thereby, the first correction signal S24 and the second correction signal S25 are generated. For example, if the tilt of the laser emitting waveform becomes steep as the output power of the laser diode LD increases, the tilt of the first correction signal S24 corresponding to the write power becomes larger than the tilt of the second correction signal S25 corresponding to the middle power, as shown in FIG. 9.

A driving signal generating unit 30B is identical to the driving signal generating unit 30 in the first embodiment shown in FIG. 6, except for a switch 53 being added. The ON/OFF switching of the switch 50 is controlled by the write pulse signal SPw supplied to the control input terminal. The write pulse signal SPw included in the strategy signal S10 indicates the positions of the top pulse and the last pulse, and the signal becomes active at the high level. It is noted that the middle pulse is omitted in a portion corresponding to 4T mark, and only the top pulse exists, as shown in FIG. 9. When the voltage of the control input terminal becomes at the high level, the switch 50 is in the ON state. On the other hand, when the voltage becomes at the low level, the switch 50 is in the OFF state. Hence, the switch 50 switches the first correction signal S24, based on the write pulse signal SPw, and outputs a choppered current to the adder 52. As a result, the write pulse current WPi outputted from the switch 50 is obtained by sampling the first tilt signal S24 at a period Ta in which the write pulse signal SPw becomes active, as shown in FIG. 9.

The ON/OFF switching of the switch 53 is controlled by themiddle pulse signal SPm supplied to the control input terminal. The middle pulse signal SPm included in the strategy signal S10 indicates the position of the middle pulse, and becomes active at the high level. When the voltage of the control input terminal becomes at the high level, the switch 53 is in the ON state. On the other hand, when the voltage becomes at the low level, the switch 53 is in the OFF state. Therefore, the switch 53 switches the second correction signal S25 based on the middle pulse signal SPm, and outputs the choppered current to the adder 52. As a result, the middle pulse current MPi outputted from the switch 53 is obtained by sampling the second tilt signal S25 at a period Tb in which the middle pulse signal SPm becomes active, as shown in FIG. 9.

The bias power current BPi obtained by converting the bias power signal BP into the current via the voltage-current converting circuit 51 is supplied to the adder 52 in addition to each output signal of the switches 50 and 53. The adder 52 synthesizes those currents and generates the corrected driving signal S30. The corrected driving signal S30 is obtained by adding the bias power current BPi, the write pulse current WPi, and the middle pulse current MPi, as shown in FIG. 9.

As a result, even if the laser diode LD has the increasing tilt characteristic as shown in FIG.9, the tilt characteristic is corrected by the corrected driving signal S30, and the laser emitting waveform shown in FIG. 9 is obtained. According to the second embodiment, even when the driving pulse, which is modulated by the three values, i.e., the bias level, the middle level and the write level, is supplied to the laser diode LD, the corrected driving signal S30 is generated so that the peculiar characteristic of the laser diode LD can be offset by utilizing the first correction signal S24 and the second correction signal S25. As a result, the ideal recording light can be obtained.

### [3rd Embodiment]

In the third embodiment, the CD-RW or the DVD-RW is utilized as the optical disc 2. As the driving pulse waveform of the laser diode LD, the multi-pulse-type formed by the write pulse and the erase pulse is assumed.

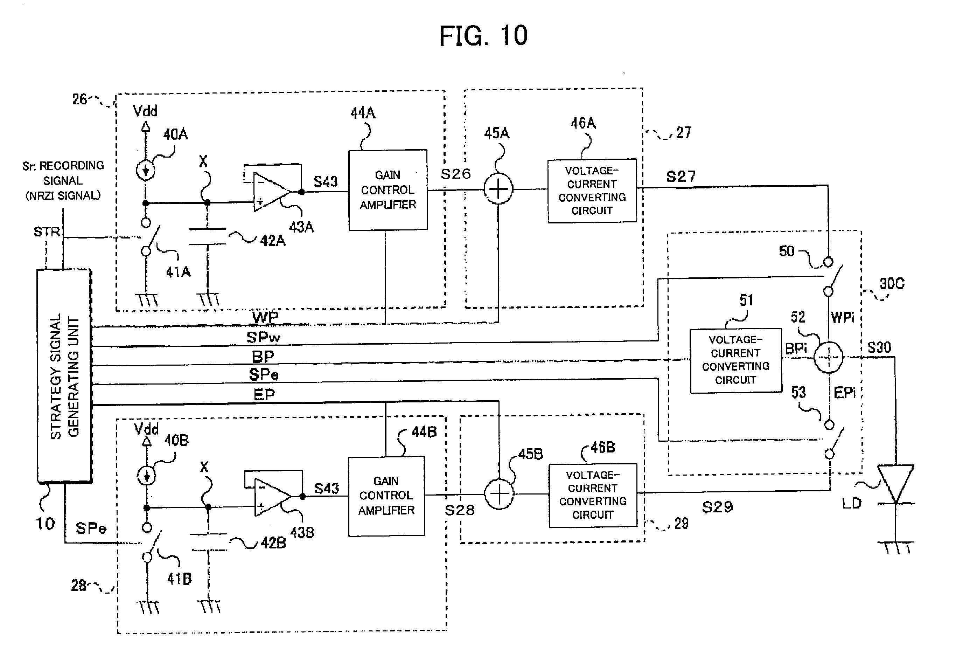

A schematic configuration of the information recording and reproducing apparatus A according to the third embodiment is identical to the configuration of the first embodiment shown in FIG. 5. However, the detailed configuration of the recording control unit 34 is different from the configuration of the first embodiment. FIG. 10 shows a main configuration of the optical pickup 32 and the recording control unit 34 according to the third embodiment. FIG. 11 shows the waveform in each unit of the main configuration.

When strategy information is the multi-pulse type formed by the write pulse and the erase pulse, the recording unit 1 can be formed as shown in FIG. 10. First, the strategy signal generating unit 10 generates, as the strategy signal S10, the write power signal WP, the bias power signal BP, the erase power signal EP indicating the erase pulse power, the write pulse signal SPw, and the erase pulse signal SPe indicating the erase pulse position.

The first tilt signal generating unit 26 and the second tilt signal generating unit 28 are formed identically to the tilt signal generating unit 21 of the first embodiment. Components 40A to 44A of the first tilt signal generating unit 26 and components 40B to 44B of the second tilt signal generating unit 27 correspond to components 40 to 44 of the tilt signal generating unit 21 shown in FIG. 6. The first outputting unit 27 and the second outputting unit 29 are formed identically to the outputting unit 22 of the first embodiment. The adder 45A and the voltage-current converting circuit 46A of the first outputting unit 27 and the adder 45B and the voltage-current converting circuit 46B of the second outputting unit 29 correspond to the adder 45B and the voltage-current converting circuit 46 of the outputting unit 45 shown in FIG. 6.

When the first tilt signal generating unit 26 generates the first tilt signal S26 having the tilt corresponding to the write power at the mark portion of the recording signal Sr, the first outputting unit 27 synthesizes the first tilt signal S26 and the write power signal WP, and voltage-current-converts the synthesized signal to output the first correction signal S27. For example, as shown in FIG. 11, when each mark portion is started from times t1 and t4, the first correction signal S27 respectively rises up from the times t1 and t4. The first correction signal S27 is obtained by adding the current corresponding to the first tilt signal S26 to the write power current corresponding to the write power signal WP.

Next, when the second tilt signal generating unit 28 generates the second tilt signal S28 having the tilt corresponding to the erase power in a period Te in which the erase pulse is active, the second outputting unit 29 synthesizes the second tilt signal S28 and the erase power signal EP, and voltage-current converts the synthesized signal to output the second correction signal S29. For example, as shown in FIG. 11, when the erase pulse becomes active in the period Te from the times t3 to t4, the second correction signal S29 becomes active in the period Te. In the case, the second correction signal S29 is obtained by adding the current corresponding to the second tilt signal S28 to the erase power current corresponding to the erase power signal EP.

A driving signal generating unit 30C is identical to the driving signal generating circuit 30 of the first embodiment shown in FIG. 6, except for the switch 53 being added. Hence, the write pulse current WPi outputted from the switch 50 is obtained by sampling the first tilt signal S27 in each period in which the write pulse signal SPw becomes active, as shown in FIG. 11. The erase pulse current EPi outputted from the switch 53 is obtained by sampling the second tilt signal S29 in the period Te in which the erase pulse signal SPe becomes active, as shown in FIG. 11.

The bias power current BPi obtained by converting the bias power signal BP to the current via the voltage-current converting circuit 51 is supplied to the adder 52 in addition to each output signal of the switches 50 and 53. The adder 52 generates the corrected driving signal S30 by synthesizing those currents. The corrected driving signal S30 is obtained by adding the bias power current BPi, the write pulse current WPi and the erase pulse current EPi, as shown in FIG. 11.

As a result, even if the laser diode LD has the tilt characteristic increasing as the time passes, the tilt characteristic is corrected by the corrected driving signal S30, and the laser emitting waveform shown in FIG. 11 is obtained. According to the third embodiment, even when the driving pulse modulated by the three values, i.e., the bias level, the erase level and the write level, is supplied to the laser diode LD, the corrected driving signal S30 is generated so that the peculiar characteristic of the laser diode LD can be offset by utilizing the first correction signal S27 and the second correction signal S29. Therefore, the ideal recording light can be obtained.

### [1st Modification]

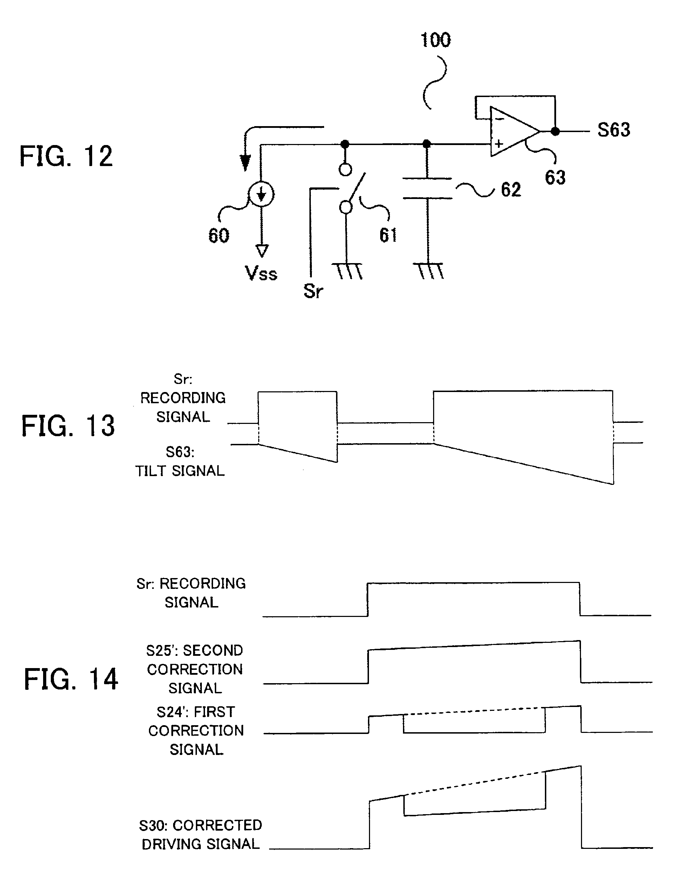

In each of the above-mentioned embodiments, as the example, the explained laser diode LD is the type whose tilt of the laser emitting waveform increases as the output power increases. However, the present invention is not limited to the type. Namely, a type whose tilt of the laser emitting waveform decreases as the output power increases may be utilized as the laser diode LD. For example, a tilt signal generating unit 100 shown in FIG. 12 may be utilized, instead of the components 40 to 43 of the first embodiment shown in FIG. 6, the components 40 to 43 of the second embodiment shown in FIG. 8, the components 40A to 43A and 40B to 43B of the third embodiment shown in FIG. 10. In the case, when a switch 61 is in the OFF state, the tilt of a tilt signal S63 is negative because the constant current source 60 let the current flow from a condenser 62 in an arrow direction. When a switch 61 is in the ON state, the charge is charged from the ground GND to the condenser 62. Thereby, the waveform of the tilt signal S63 becomes negative to the ground level GND, as shown in FIG. 13. Thus, even when the tilt of the laser emitting waveform decreases, the ideal recording light can be obtained.

### [2nd Modification]

In the above-mentioned second embodiment, the tilt of the laser emitting waveform is corrected by generating the first correction signal S24 (corresponding to the top pulse and the last pulse) and the second correction signal S25 (corresponding to the middle pulse) which are divided from the point of view of time. However, as shown in FIG. 14, the corrected driving signal S30 may be generated by synthesizing the first correction signal S24' and the second correction signal S25' which are divided in the level direction, as shown in FIG. 14. In the case, the second correction signal S25' corresponding to the middle power is generated in all the periods of the mark portion, while the first correction signal S24' corresponding to a quantity larger than the middle power is generated at the position of the write pulse. By adding those signals, the corrected driving signal S30 may be generated. In the case, in the recording unit 1 shown in FIG. 8, the recording signal Sr which is active in all the periods of the mark portion may be supplied, instead of the middle pulse signal SPm.

### [3rd Modification]

In each of the above-mentioned embodiments and modifications, the tilt signal is generated by utilizing the gain control amplifier. However, the tilt signal may be generated by adjusting the current quantity of the constant current source 40 or 60 corresponding to the write power, the middle power and the erase power. In the case, since the gain control amplifier can be omitted, the configuration may be simplified. The voltage-current converting circuit may be set immediately in front of the laser diode LD. In the case, the number of the voltage-current converting circuits can be reduced.

As explained above, according to the above-mentioned embodiments and the modifications, even when the light source, such as the laser diode LD, has the tilt characteristic in the output waveform, the peculiar characteristic of the light source can be offset by utilizing the correction signal having the opposite characteristic to the tilt characteristic. Thereby, since the effect due to the peculiar characteristic is removed, accurate information recording is possible.

## Claims

1. An information recording apparatus (1) comprising:
a light source (LD) which emits a recording light for information recording based on an input signal (Sr);
a strategy signal generating unit (10) which generates a strategy signal (WP,MP,BP,EP) indicating a driving signal waveform obtained by modulating a recording signal (Sr) having a mark portion and a space portion in accordance with a length of the recording mark portion;
a correction signal generating unit (20) which generates a correction signal (S24 - S29) for offsetting a tilt of a waveform level of the recording light; and
a driving signal generating unit (30) which generates a corrected driving signal (S30) for correcting the tilt of the waveform level of the recording light based on the strategy signal and the correction signal, and supplies the corrected driving signal to the light source as the input signal.

2. The information recording apparatus (1) according to claim 1, wherein the correction signal generating unit (20) comprises:
a tilt signal generating unit (21) which generates a tilt signal (S21) having a tilt corresponding to a write power in the mark portion of the recording signal, and
an outputting unit (22) which synthesizes the tilt signal (S21) and a write power signal (WP) indicating the recording power, and outputs the correction signal (S20).

3. The information recording apparatus according to claim 1, wherein the driving signal generating unit (30) synthesizes a signal obtained by switching the correction signal (S20) based on the strategy signal and a bias power signal (BP) indicating a bias power to generate the corrected driving signal.

4. The information recording apparatus (1) according to claim 1, , wherein the strategy signal comprises a write pulse signal indicating a write pulse and a middle pulse signal indicating a middle pulse, and wherein the correction signal generating unit (20) comprises:
a tilt signal generating unit (23) which generates a first tilt signal (23a) having the tilt corresponding to the write power and a second tilt signal (23b) having a tilt corresponding to a middle power in the mark portion of the recording signal;
a first outputting unit (24) which synthesizes the first tilt signal and the write power signal (WP) indicating the write power to output the first correction signal (S24) as the correction signal; and
a second outputting unit which synthesizes the second tilt signal (23b) and the middle power signal (MP) indicating the middle power to output the second correction signal (S25) as the correction signal.

5. The information recording apparatus (1) according toclaim4, wherein the tilt signal generatingunit (23) comprises:
a tilting signal generatingunitwhich generates a tilting signal having a predetermined tilt in the mark portion;
a first tilt signal generating unit which amplifies the tilting signal by a gain corresponding to the write power to generate the first tilt signal; and
a second tilt signal generating unit which amplifies the tilting signal by a gain corresponding to the middle power to generate the second tilt signal.

6. The information recording apparatus (1) according to claim 4, wherein the driving signal generating unit (30) synthesizes a signal (WPi) obtained by switching the first correction signal (S24) based on the write pulse signal (WP), a signal (MPi) obtained by switching the second correction signal (S25) based on the middle pulse signal (MP), and the bias power signal (BP) indicating the bias power to generate the corrected driving signal (S30).

7. The information recording apparatus (1) according to claim 1, wherein the strategy signal comprises the write pulse signal indicating the write pulse and an erase pulse signal indicating an erase pulse, and wherein the correction signal generating unit (20) comprises:
a first tilt signal generating unit (26) which generates the first tilt signal (S26) having the tilt corresponding to the write power in the mark portion of the recording signal;
a first outputting unit (27) which synthesizes the first tilt signal (S26) and the write power signal (WP) indicating the write power to output the first correction signal (S27) as the correction signal;
a second tilt signal generating unit (28) which generates the second tilt signal (S28) having a tilt corresponding to the erase power in a period in which the erase pulse signal becomes active; and
a second outputting unit which synthesizes the second tilt signal (S28) and the erase power signal (EP) indicating the erase power to output the second correction signal (S29) as the correction signal.

8. The information recording apparatus (1) according to claim 7, wherein the driving signal generating unit (30) synthesizes the signal (WPi) obtained by switching the first correction signal (S27) based on the write pulse signal (SPw), the signal (EPi) obtained by switching the second correction signal (S29) based on the erase pulse signal (SPe), and the bias power signal (BPi) indicating the bias power to generate the corrected driving signal (S30).

9. An information recording method which is executed by an information recording apparatus comprising a light source (LD) emitting a recording light for information recording, including:
a strategy signal generating process which generates a strategy signal (S10) indicating a driving signal waveform obtained by modulating a recording signal (Sr) having a mark portion and a space portion in accordance with a length of the mark portion;
a correction signal generating process which generates a correction signal (S20) for offsetting a tilt of a waveform level of the recording light; and
a corrected driving signal generating process which generates a corrected driving signal (S30) for correcting a tilt of the waveform level of the recording light based on the strategy signal and the correction signal, and supplies the corrected driving signal to the light source as an input signal.

10. The information recording method according to claim 9, wherein the correction signal generating process comprises:
a process which generates a tilt signal (S21) having a tilt corresponding to a write power in the mark portion of the recording signal, and
a process which synthesizes the tilt signal (S21) and a write power signal (WP) indicating a recording power to output the correction signal.

11. The information recording apparatus according to claim 9, wherein the strategy signal comprises a write pulse signal indicating a write pulse and a middle pulse signal indicating a middle pulse, and wherein the correction signal generating process comprises:
a process which generates a second tilt signal having a first tilt signal (S23a) having the tilt corresponding to the write power and a second tilt signal (S23b) having a tilt corresponding to a middle power in the mark portion of the recording signal;
a process which synthesizes the first tilt signal (23a) and the write power signal (WP) indicating the write power to generate a first correction signal (S24);
a process which synthesizes the second tilt signal (S23b) and a middle power signal (MP) indicating the middle power to generate a second correction signal (S25);
a process which outputs the first correction signal (S24) and the second correction signal (S25) as the correction signal.

12. The information recording method according to claim 9, wherein the strategy signal comprises a write pulse signal indicating a write pulse and an erase pulse signal indicating an erase pulse, and wherein the correction signal generating process comprises:
a process which generates the first tilt signal (S26) having the tilt corresponding to the write power in the mark portion of the recording signal;
a process which synthesizes the first tilt signal (S26) and the write power signal (WP) indicating the write power to generate the first correction signal (S27);
a process which generates the second tilt signal (S28) having the tilt corresponding to the erase power in a period in which the erase pulse signal becomes active;
a process which synthesizes the second tilt signal (S28) and the erase power signal (EP) indicating the erase power to generate the second correction signal (S29); and
a process which outputs the first correction signal (S27) and the second correction signal (S29) as the correction signal.
